Europäisches Patentamt

European Patent Office

Office européen des brevets

(11) Publication number: **0 052 526**
**A1**

## (12) EUROPEAN PATENT APPLICATION

(21) Application number: **81305473.1**

(22) Date of filing: **19.11.81**

(51) Int. Cl.³: **A 01 G 9/10**

(30) Priority: **19.11.80 GB 8037070**

(43) Date of publication of application:
**26.05.82 Bulletin 82/21**

(84) Designated Contracting States:
**BE DE FR GB NL**

(71) Applicant: UNIVERSITY COLLEGE CARDIFF
CONSULTANTS LTD.
P.O. Box 78
Cardiff, CF1 1XL(GB)

(72) Inventor: Bellamy, Denis
P.O. Box 78
Cardiff, CF1 IXL(GB)

(74) Representative: Arthur, Bryan Edward
Withers & Rogers 4 Dyer's Buildings Holborn
London EC1N 2JT(GB)

(54) Container for plant growth.

(57) The invention relates to containers having a growth medium and in which plants can be directly planted and grown. Such containers normally contain fertilisers in a base medium of peat or compost and can be heavy and awkward to carry and store. The invention provides a light compressible container that can be rolled up for easier carriage and storage. The container of the invention is a bag containing a plant growth medium, the medium comprising a cohesive mixture of from 25 to 95% by weight of a resilient, hydrophobic polymeric foam crumb and from 5 to 75% by weight of a solid, hydrophilic non-filamentary particulate material, at least some of the solid particulate material being chemically, mechanically or otherwise attached to the surfaces of the pieces of foam crumb, and the container being resilient compressible whereby it can be rolled up.

By "hydrophobic foam" is meant foam that does unaided absorb water in any significant quantity and hence will only effectively become wetted, other than at a surface in direct contact with water, by external aids e.g. mechanical squeezing.

There is preferably from 15 to 95% by weight of the foam in the mixture and, correspondingly, preferably from 5 to 75% by weight of hydrophilic material. The foam is preferably polyether polyurethane and the hydrophilic material should be capable of absorbing at least 20% of its own weight of water.

EP 0 052 526 A1

CONTAINER FOR PLANT GROWTH

This invention relates to a container in which plants can be grown. In recent years such containers, usually in the form of a plastic sack containing peat or compost and fertiliser have become very popular. However, there is a need to provide an improved container which can overcome certain disadvantages of those presently available, in particular disadvantages of weight and size. A container filled with peat/compost/fertiliser-type mixtures can be quite heavy and bulky rendering it awkward to carry and difficult to store and transport. The present invention aims to provide a lighter container that is compressible and can be rolled up if required for storage and transport before it is actually used.

Accordingly the invention provides a container in which to grow plants, the container being a bag containing a plant growth medium, the medium comprising a cohesive mixture of from 25 to 95% by weight of a resilient, hydrophobic polymeric foam crumb and from 5 to 75% by weight of a solid hydrophilic non-filamentary particulate material, at least some of the solid particulate material being chemically, mechanically or otherwise attached to

2.

the surfaces of the pieces of foam crumb, and the container being resiliently compressible whereby it can be rolled up.

By "hydrophobic foam" is meant foam that does not unaided absorb water in any significant quantity and hence will only effectively become wetted, other than at a surface in direct contact with water, by external aids, e.g mechanical squeezing.

There is preferably from 30 to 90% by weight of this foam in the mixture and, correspondingly, preferably from 70 to 5% by weight of the hydrophilic material.

The mixture of hydrophobic foam and hydrophilic material may be the sole constituent of the plant growth medium. However, this is not necessarily so and other ingredients may well be incorporated, e.g. water, wetting agents and fertiliser as mentioned below. Where other ingredients are incorporated, then the preferred weight percentage of the two principal ingredients are as follows based on total weight of medium but excluding any water:-

| | |
|---|---|
| hydrophobic foam | 15-95% |
| Hydrophilic material | 5-75% |

3.

The foam is preferably a resilient polyurethane foam, especially polyether polyurethane but other resilient polymeric foams may be utilised. For example polyester polyurethane, natural rubber latex foam, resilient polyether or p.v.c. foam may be used if desired. The foam crumb is preferably of size within the range which will pass through a sieve of mesh from 3 to 19 mm, especially within the range 6 to 12 mm.

The invention is particularly useful for utilisation of scrap polymeric foam, e.g off-cuts, and the domed top of conventionally-formed polyurethane 'loaves' but it is not limited thereto

The hydrophilic material should be capable of absorbing and holding at least 20% of its own weight of water and prefereably at least 75%. This material may be organic or inorganic and by "particulate" is meant to include fibrous materials as indicated below. Mixtures of more than one hydrophilic material with advantage may be used.

Examples of suitable hydrophilic materials include perlite, fly ash, peat and Fuller's Earth. Their size should be such that they can become attached around the surfaces of individual pieces of foam crumb, this

4.

normally being by virtue of cell openings on the foam surface into which the particles of hydrophilic material can lodge. Typical cell sizes for polyurethane foams are from 1mm to 0.3mm although courser foams of 2mm or greater cell size are known. Clearly materials such as bark and peat need to be shredded or powdered to a suitably small size before incorporation although it will be appreciated that the length of fibrous material is of less relevance than the dimensions of its transverse cross-section.

In addition to, or alternatively to the mechanical bond established by virtue of the hydrophobic material lodging within the cell openings of the foam, a chemical bond may be accomplished using a binder; for example, a compatible adhesive such as a polyurethane adhesive. The binder or adhesive may also contain nutrient and other plant growth assisting compositions. Preferably, the compatible adhensive is non-water soluble. A wetting agent may, if desired, be included in the medium.

The wetting agent may be any conventionally-used wetting agent, i.e. non-toxic ionic or non-ionic compound, for example soaps, stearates, cleates and polyethylene oxides.

The amount of wetting agent used will normally be relatively small, e.g. from 0.03 to 0.10% by weight based on the total dry weight of the medium in the bag, although larger amounts may be used if desired.

The bag is preferably of plastics material, e.g. flexible polyethylene or p.v.c. It may be provided with one or more apertures through which the plants may grow and with drainage holes.

It will be appreciated that because of the different densities involved the filled bag contains, say from 80% to 95% by volume of foam and hence the majority of the bag volume is normally filled with foam.

Containers of the invention can thereofre be quite light in weight due largely to the foam constituent and and are compressible and resilient and lend themselves to folding or rolling up for easy carry and storage. The foam moreover provides useful air spaces throughout the growing medium which is a considerable advantage.

When filling the bag to form the container of the invention it is preferred first to wet the foam crumb with up to 50% by weight of water (based on the weight of the total bag contents). The other ingredients may then be mixed with the wetted foam and it is important to ensure adequate mixing to give a substantial uniform product. Since the hydropbobic foam does not naturally absorb and retain water it may need to be wetted by mechanical squeezing.

Thus in a preferred embodiment of the invention it will be seen that the container as made and as to be sold will also contain up to 50% by weight of water based on the total weight of its contained medium.

Further water can of course be added as and when required when the container is in use.

Similarly the medium may contain balanced nutrients (fertiliser) sufficient at least to support the plants to be grown in the container during the early part of their life.    Alternatively, no nutrients may be included in the bag and they must be added as required afterwards when the container is put into use.

The medium may be packed into the bag to form the container of the invention by any convenient means and conventional vacuum packing or compression packing techniques may, for example, be used.

Specific embodiments of the invention are now described by way of example only in the following Examples in which all parts are by weight.

Examples

The following plant growth medium formulations were used:

|  | Example 1 | Example 2 | Example 3 |
|---|---|---|---|
| Polyurethane foam crumb 6mm sieve b | 0.9 kg | 0.8 kg | 0.9 kg |
| Fly ash | 1.5 kg | - | 1.5 kg |
| Perlite | 0.3 kg | 0.6 kg | 0.3 kg |
| Powdered bark | - | 1.4 kg | 0.7 kg |
| Fertiliser | 0.5 kg | 0.5 kg | 0.5 kg |
| Water | 1.8 kg | 1.6 kg | 1.8 kg |
| Wetting agent | - | - | 0.002 kg |

In examples 1 and 2 the water was first mechanically dispersed in the foam crumb. The hydrophilic materials and fertiliser were then mixed into the wetted foam crumb by means of adding gradually in a revolving drum. The plant growth medium was then packed into a suitably-sized plastics bag container of dimensions 950mm x 410mm.

In Example 3 a similar procedure was followed except that wetting agent was first added to the water. The container had dimensions 950mm x 410mm.

Samples of all types of filled containers were used to grow tomatoes and found to give very satisfactory yields.

8.

All the filled containers were highly flexible and before use could be rolled tightly to a conveniently-handled small size and could be maintained in rolled up form by removable sticky tape.

CLAIMS:

1. A container in which to grow plants, the container being a bag containing a plant growth medium, the medium comprising a cohesive mxiture of from 25% to 95% by weight of a resilient, hydrophobic polymeric foam crumb and from 5 to 75% by weight of a solid hydrophilic non filamentary particulate material, at least some of the solid particulate material being chemically or mechanically attached to the surfaces of the pieces of foam crumb, and the container being resiliently compressible whereby it can be rolled up.

2. A container according to Claim 1, in which the mixture contains from 30 to 95% by weight of foam crumb.

3. A container according to Claim 1 or 2, in which the foam crumb is of size to pass through a sieve of mesh 3 to 19mm.

4. A container according to Claim 3, in which the foam crumb is of size to pass through a sieve of mesh 6 to 12mm.

5. A container according to any of the preceding Claims, in which the foam is a polyether or polyester polyurethane.

6. A container according to any one of Claims 1 to 4, in which the foam crumb is natural rubber latex foam, p.v.c. foam or polyethylene foam.

7.    A container according to any one of the preceding Claims in which the foam is scrap foam crumb.

8.    A container according to any one of the preceding Claims, in which the foam crumb has cell sizes in the range 0.3mm to 1.0mm.

9.    A container according to any one of the preceding Claims, which contains from 15 to 95% by weight of the hydrophobic foam and from 5 to 75% by weight of the hydrophilic material based on the total weight of the plant growth medium excluding any water.

10.    A container according to any one of the preceding Claims, in which the hydrophilic material is fly-ash, perlite or Fuller's Earth.

11.    A container according to any one of Claims 1 to 9, in which the hydrophilic material is fibrous.

12.    A container according to Claim 11, in which the hydrophilic material is peat or bark.

13.    A container according to any one of the preceding Claims, in which the hydrophilic material is a mixture of a fibrous and a particulate material.

14.    A container according to any one of the preceding Claims, which contains a wetting agent.

15.    A container to Claim 14, in which the wetting agent is a stearate or an oleate.

16.    A container according to any one of the Claims 1 to 14, in which the wetting agent is a polyetheylene oxide.

17.    A container according to Claim 14, 15 or 16, in which the wetting agent is present in an amount of 0.03 to 0.10% based on the total dry weight of the bag mixture.

18.    A container according to any one of the preceding Claims, in which the bag is of p.v.c. or polyethylene and is provided with growth apertures and drainage holes.

19.    A container according to any one of the preceding Claims, in which the mixture contains up to 50% by weight of water.

20.    A container according to any one of Claims 1 to 19 wherein the solid particulate material is chemically attahced to the foam crumb using a compatible adhesive.

21.    A container according to Claim 20 wherein the adhesive includes a plant growth assisting composition.

22.    A container in which to grow plants substantially as hereinbefore described with reference to the Examples.

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| Y | GB - A - 1 459 193 (FISONS) <br><br> * page 1, line 70 to page 2, line 117 * <br><br> -- | 1,11, 12 | A 01 G 9/10 |
| Y | GB - A - 2 014 024 (ASSOCIATION FORET-CELLULOSE) <br><br> * page 3, lines 21-43; figures 1,2 * <br><br> -- | 1 | |
| Y | CH - A - 409 507 (PROPLASTO) <br><br> * page 1, line 68 to page 2, line 82; claim 10 * <br><br> ----- | 1,5,6, 10,20, 21 | **TECHNICAL FIELDS SEARCHED (Int.Cl. ³)** <br><br> A 01 G 9/10 <br> 31/00 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 18-02-1982 | HERYGERS |

EPO Form 1503.1  06.78